## Europäisches Patentamt

## European Patent Office

## Office européen des brevets

(19)

(11) Veröffentlichungsnummer: **0 250 368**
**B1**

(12)

# EUROPÄISCHE PATENTSCHRIFT

(45) Veröffentlichungstag der Patentschrift:
**25.07.90**

(21) Anmeldenummer: **87810342.3**

(22) Anmeldetag: **15.06.87**

(51) Int. Cl.⁵: **G03B 27/40**

(54) **Fotografische Kopiervorrichtung.**

(30) Priorität: **20.06.86 CH 2505/86**

(43) Veröffentlichungstag der Anmeldung:
**23.12.87 Patentblatt 87/52**

(45) Bekanntmachung des Hinweises auf die Patenterteilung:
**25.07.90 Patentblatt 90/30**

(84) Benannte Vertragsstaaten:
**CH DE ES FR GB IT LI**

(56) Entgegenhaltungen:
**DE-A- 3 116 819**
**DE-A- 3 418 038**

(73) Patentinhaber: **GRETAG Aktiengesellschaft,
Althardstrasse 70, CH-8105 Regensdorf(CH)**

(72) Erfinder: **Bürki, Peter, Heimstrasse 2,
CH-5430 Wettingen(CH)**
Erfinder: **Mast, Fred, Dr., Fürstenlandstrasse 15,
CH-9500 Wil(CH)**

(74) Vertreter: **Kleewein, Walter, Dr. et al, Patentabteilung
CIBA-GEIGY AG Postfach, CH-4002 Basel(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine fotografische Kopiervorrichtung gemäss dem Oberbegriff des Patentanspruchs 1.

Moderne fotografische Kopierautomaten, sog. Printer, sind meistens zum Kopieren verschiedener Vorlagenformate eingerichtet. Sie besitzen dazu manuell oder elektrisch gesteuerte auswechselbare Halterungen für die verschiedenen Kopiervorlagen, zu welchen Halterungen u.a. auch entsprechend angepasste Vorlagenmasken gehören, welche die Grösse der vom Kopierlicht beaufschlagten Vorlagenfläche begrenzen. Das Kopierlicht wird üblicherweise z.B. mittels im wesentlichen pyramidenstumpfförmiger, innen verspiegelter Lichtschächte oder dergleichen vermischt, wobie deren Lichtaustrittsfläche an die Grösse der Vorlagenmaske angepasst ist. Beim Wechsel des Vorlagenformats müssen also gleichzeitig auch immer der Mischschacht oder die aequivalenten optischen Komponenten mit gewechselt werden.

Durch die Erfindung soll nun dieses umständliche Vorgehen vermieden und eine Kopiervorrichtung geschaffen werden, bei der der Formatwechsel auf einfachere und schnellere Art und insbesondere automatisiert vonstatten geht.

Die erfindungsgemässe Vorrichtung, die dieser Aufgabenstellung genügt, ist im Patentanspruch 1 beschrieben. Bevorzugte Ausführungsformen sind Gegenstände der abhängigen Ansprüche.

Im folgenden wird die Erfindung anhand der Zeichnung näher erläutert.

Es zeigen:

Fig. 1 eine schematische Darstellung der wichtigsten Teile einer erfindungsgemässen Kopiervorrichtung in einer ersten Betriebseinstellung,

Fig. 2 ein Detail aus Fig. 1 in einer zweiten Betriebseinstellung und

Fig. 3 ein weiteres Detail aus Fig. 1 in Frontansicht.

In der Zeichnung sind nur die für das Verständnis der Erfindung wesentlichen Teile der Kopiervorrichtung dargestellt. Gehäuse, Rahmen, Befestigungen, elektrische Komponenten etc. sind, soweit sie nicht unmittelbar mit der Erfindung zusammenhängen, weggelassen.

Die dargestellte Kopiervorrichtung umfasst eine Positioniereinrichtung oder Halterung P für Kopiervorlagen V unterschiedlichen Formats, eine als Ganzes mit B bezeichnete Beleuchtungseinrichtung zum Beaufschlagen der Kopiervorlagen mit Kopierlicht und eine Abbildungsoptik O zum Abbilden der Kopiervorlage V auf ein lichtempfindliches Kopiermaterial K. Ferner ist im Strahlengang der Abbildungsoptik O noch ein servobetätigter Farbverschluss F vorgesehen. Insoweit entspricht die Vorrichtung voll und ganz den herkömmlichen Kopiergeräten dieser Art, beispielsweise etwa den vollautomatischen Hochleistungskopiervorrichtungen Typ 3116 der Anmelderin. Der Unterschied der erfindungsgemässen Vorrichtung gegenüber diesen bekannten Vorrichtungen liegt im wesentlichen in der Beleuchtungsvorrichtung B. Diese wird daher im folgenden näher beschrieben.

Die Beleuchtungsvorrichtung B umfasst eine Halogen-Lampe 1, einen Reflektor 2, einen zweilinsigen Kondensor 3, ein Wärmeschutz(IR-)Filter 4, eine feste Linse 5, einen Umlenkspiegel 6 und ein als Ganzes mit 7 bezeichnetes Vario-Objektiv oder Zoom. Die optische Anordnung ist dabei so getroffen, dass der Kondensor 3 in eine feststehende Eingangslinse 71 des Vario-Objektivs 7 und diese in die Ebene der Kopiervorlage V abgebildet wird. Dabei kann die Grösse der vom Kopierlicht beaufschlagten Fläche der Kopiervorlage durch axiales Verstellen der beiden einlinsigen Vario-Glieder 72 und 73 des Vario-Objektivs 7 beliebig verändert und insbesondere an das Vorlagenformat angepasst werden.

Die beiden beweglichen Linsen 72 und 73 des Vario-Objektivs 7 sind in schlittenartigen Halterungen 82 und 83 montiert, die ihrerseits auf zwei Gleitstangen 84 und 85 in Richtung der Objektivachse 70 beweglich gelagert sind. Zum Verstellen der Halterungen 82 und 83 und damit der Linsen 72 und 73 sind zwei Spindeln 86 und 87 vorgesehen, die über Riemen 88 und 89 von zwei Schrittmotoren 90 und 91 angetrieben werden. Zwei Mikroschalter 92 und 93 dienen zur Ueberwachung der oberen bzw. unteren Extremposition (Endstellung) der Halterungen 82 bzw. 83 und definieren gleichzeitig die Referenzpositionen für die Bewegung der Linsen.

Das Vario-Objektiv 7 umfasst ausser dem feststehenden einlinsigen Vorderglied 71 und den beiden beweglichen Linsen 72 und 73 noch ein feststehendes, ebenfalls einlinsiges Hinterglied 74, welches nahe der Ebene der Kopiervorlage angeordnet ist. Zwischen diesem Hinterglied 74 und der Kopiervorlagenebene befindet sich ferner noch eine Streuscheibe 75.

Die Mikroschalter 92 und 93 und die beiden Schrittmotoren 90 und 91 sind an eine elektronische Steuerung 100 angeschlossen, welche an einem Eingang 101 eine Information über das aktuelle Format der in der Halterung P positionierten, zu kopierenden Vorlage V erhält und aufgrund dieser Information die beiden Linsen 72 und 73 anhand einer abgespeicherten, zuvor rechnerisch oder empirisch ermittelten Positionstabelle so verfährt, das die Grösse der vom Kopierlicht beaufschlagten Fläche der Kopiervorlage deren Format entspricht. Die Information über das Vorlagenformat kann von irgendwoher kommen, beispielsweise etwa von dem bei solchen Kopiergeräten üblicherweise vorgesehenen Belichtungsrechner oder von einer Tastatur oder dergleichen.

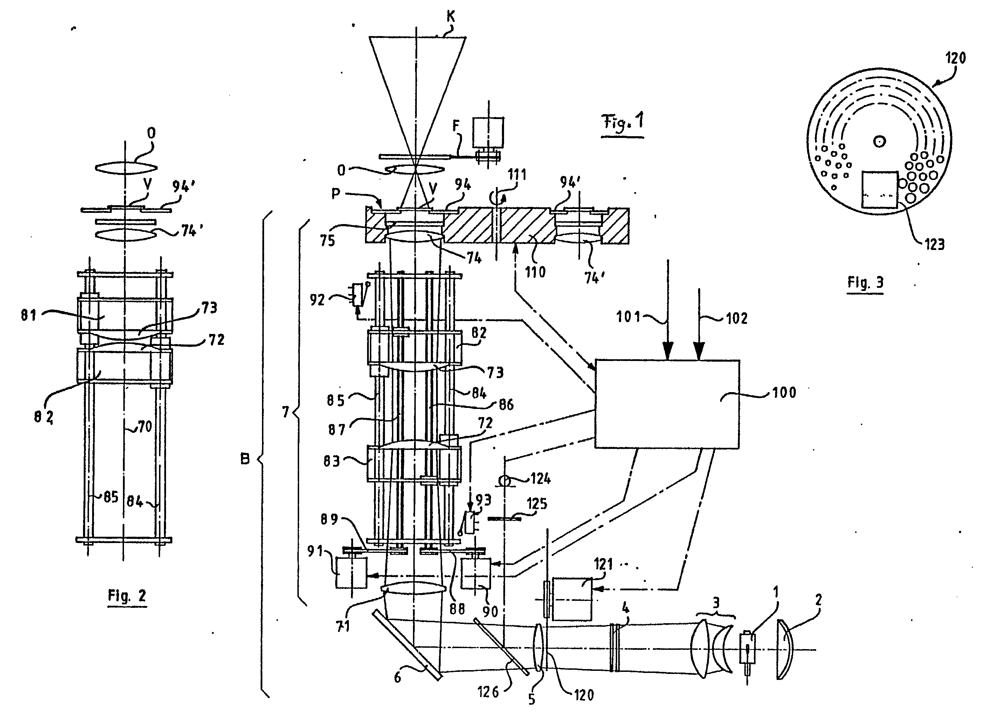

Die Positionierungseinrichtung P für die Kopiervorlagen V umfasst u.a. eine Vorlagenmaske 94. Diese und die das Hinterglied des Vario-Objektivs 7 bildende Linse 74 sind zusammen in einer karusselartigen, um die Achse 111 drehbaren Wechseleinrichtung 110 angeordnet. Die Wechseleinrichtung weist längs ihres Umfangs vier zugeordnete, aufeinander abgestimmte Linsen-Vorlagenmasken-Kombinationen 74' - 94' auf, welche durch entsprechendes Verdrehen der Wechseleinrichtung 110 selektiv in den Beleuchtungsstrahlengang eingeführt werden können. Zu jeder Vorlagenmaske 94 (entsprechend einem bestimmten Vorlagenformat) gehört eine zugeordnete Linse 74 und eine zugeordnete Stellung der beiden beweglichen Linsen 72 und 73. In Fig. 1 ist die Situation für ein erstes, grösseres Vorlangenformat dargestellt, Fig. 2 zeigt die Anordnung für ein zweites, kleineres Vorlagenformat.

Die Wechseleinrichtung 110 kann manuell oder elektrisch betätigbar sein. Es kann auch eine Koppelung zwischen der Steuerung 100 (oder dem nicht dargestellten Rechner) und der Wechseleinrichtung 110 vorgesehen sein derart, dass aufgrund des gewählten Vorlagenformats automatisch die richtige Vorlagenmaske 94 und die zugehörige Linse 74 in den Strahlengang eingeschwenkt werden. Umgekehrt kann auch ein Sensor vorgesehen sein, der die jeweils aktive Maske erkennt und über die Steuerung 100 die entsprechende Einstellung der Linsen 72 und 73 veranlasst.

Im Beleuchtungsstrahlengang zwischen dem Wärmeschutzfilter 4 und der festen Linse 5 ist ein Lichtabschwächorgan in Form einer Lochscheibe 120 angeordnet, die über einen von der Steuerung 100 getriebenen Schrittmotor 121 in jede beliebige Winkellage gebracht werden kann. Die Lochscheibe 120 weist, wie Fig. 3 zeigt, eine Vielzahl von Löchern 122 auf, deren Gesamtöffnungsquerschnitt in Umfangsrichtung von Sektor zu Sektor verschieden ist, sodass die Lichtabschwächwirkung von der Dreh(-Winkel-)Stellung der exzentrisch in den Strahlengang 123 eintauchenden Lochscheibe abhängt und über diese kontinuierlich verändert werden kann. Ein Photoempfänger 124 empfängt über eine Streuscheibe 125 das von einem nach der festen Linse 5 angeordneten, teildurchlässigen Spiegel 126 ausgeblendete Licht und dient in Verbindung mit der Steuerung 100 zur Kontrolle des eingestellten Abschwächungsfaktors. Der Sollwert für die gewünschte Lichtabschwächung wird der Steuerung über einen Eingang 102 zugeführt.

## Patentansprüche

1. Fotografische Kopiervorrichtung mit einer Einrichtung zum Positionieren von Kopiervorlagen unterschiedlicher Formate, einer Beleuchtungseinrichtung zum Beaufschlagen der jeweils positionierten Kopiervorlage mit Kopierlicht und einer Einrichtung zum Abbilden der Kopiervorlage auf ein lichtempfindliches Kopiermaterial, dadurch gekennzeichnet, dass die Beleuchtungseinrichtung ein variables Beleuchtungsobjektiv (7) umfasst, mittels welchem die Grösse der vom Kopierlicht beaufschlagten Vorlagenfläche an das jeweils eingestellte Vorlagenformat anpassbar ist.

2. Vorrichtung nach Anspruch 1, dadurch gekennzeichnet, dass das Beleuchtungsobjektiv (7) elektrisch verstellbar ausgebildet ist und eine Steuerung (100) vorgesehen ist, welche das Beleuchtungsobjektiv (7) entsprechend dem Vorlagenformat einstellt.

3. Vorrichtung nach Anspruch 1 oder 2, dadurch gekennzeichnet, dass das variable Beleuchtungsobjektiv (7) auf seiner der Kopiervorlage (V) zugewandten Seite ein optisch feststehendes, jedoch auswechselbar montiertes Anpassglied (74) aufweist.

4. Vorrichtung nach Anspruch 3, dadurch gekennzeichnet, dass mehrere verschiedene Anpassglieder (74,74') auf einer Wechseleinrichtung (110) montiert sind und wahlweise in den Strahlengang des Beleuchtungsobjektivs (7) einschwenkbar sind.

5. Vorrichtung nach Anspruch 4, dadurch gekennzeichnet, dass eine Wechseleinrichtung (110) für unterschiedliche Vorlagenmasken (94,94') vorgesehen ist.

6. Vorrichtung nach Anspruch 5, dadurch gekennzeichnet, dass die die Anpassglieder (74,74') tragende Wechseleinrichtung und die Wechseleinrichtung für die Vorlagenmasken (94,94') gekoppelt sind oder eine Einheit (110) bilden und jeder Vorlagenmaske ein Anpassglied zugeordnet ist.

7. Vorrichtung nach Anspruch 6, dadurch gekennzeichnet, dass ein Sensor zur Erkennung der jeweils im Kopierstrahlengang befindlichen Vorlagenmaske vorgesehen ist, und dass die Steuerung (100) das variable Beleuchtungsobjektiv (7) nach Massgabe des Sensors einstellt.

8. Vorrichtung nach Anspruch 6, dadurch gekennzeichnet, dass die Wechseleinrichtungen (110) elektrisch angetrieben sind und von der Steuerung (100) nach Massgabe des gewünschten Vorlagenformats betätigt werden.

9. Vorrichtung nach einem der Ansprüche 1 - 8, dadurch gekennzeichnet, dass die Beleuchtungseinrichtung ein elektrisch verstellbares Lichtabschwächorgan (120) umfasst.

10. Vorrichtung nach Anspruch 9, dadurch gekennzeichnet, dass das Lichtabschwächorgan eine Lochscheibe (120) mit je nach Winkellage unterschiedlicher Gesamtöffnung ist.

## Revendications

1. Dispositif de copiage photographique comportant un dispositif de positionnement d'originaux de formats différents à copier, une installation d'éclairage qui projette sur l'original à copier, positionné, une lumière de copiage, et un dispositif de reproduction de l'original à copier sur un support ou une surface de tirage sensible à la lumière, dispositif caractérisé en ce que l'installation d'éclairage comprend un objectif (7) d'éclairage à foyer variable, au moyen duquel la grandeur de la surface d'original irradié par la lumière de copiage peut être adaptée au format respectif de l'original réglé.

2. Dispositif selon la revendication 1, caractérisé en ce que l'objectif (7) d'éclairage est réalisé de façon à pouvoir être électriquement réglé et en ce qu'il est prévu une commande (100), qui met au point l'objectif (7) d'éclairage en fonction du format de l'original à reproduire.

3. Dispositif selon la revendication 1 ou 2, caractérisé en ce que l'objectif (7) d'éclairage à foyer variable présente, sur sa face en regard de l'original (V) à reproduire, un élément (74) d'adaptation pourvu d'un montage optique fixe, mais néanmoins remplaçable.

4. Dispositif selon la revendication 3, caractérisé en ce que plusieurs éléments (74, 74') d'adaptation différents sont montés sur un dispositif d'alternance (110) et sont orientables à volonté sur le trajet des rayons de l'objectif (7) d'éclairage.

5. Dispositif selon la revendication 4, caractérisé en ce qu'est prévu un dispositif d'alternance (110) pour la mise en place de différents masques (94, 94') pour originaux.

6. Dispositif selon la revendication 5, caractérisé en ce que le dispositif d'alternance portant les éléments d'adaptation (74, 74') et le dispositif d'alternance des masques (94, 94') d'originaux sont couplés ou constituent une unité (110), et en ce qu'un élément d'adaptation est associé à chaque masque.

7. Dispositif selon la revendication 6, caractérisé en ce qu'il est prévu un détecteur pour l'identification du masque d'original se trouvant sur le trajet des rayons de copiage, et en ce que la commande (100) met au point l'objectif d'éclairage (7) variable, en fonction des indications du détecteur.

8. Dispositif selon la revendication 6, caractérisé en ce que les dispositifs d'alternance (110) sont entraînés électriquement et sont actionnés par la commande (100) en fonction du format d'original désiré.

9. Dispositif selon l'une des revendications 1 à 8, caractérisé en ce que le dispositif d'éclairage comprend un organe (120) réglable électriquement pour l'atténuation de la lumière.

10. Dispositif selon la revendication 9, caractérisé en ce que l'organe d'atténuation de lumière est un disque perforé (120), dont l'ouverture totale varie selon la position angulaire.

## Claims

1. Photographic copying apparatus with a device for the positioning of copy masters with different formats, an illuminating device for the exposure of the copy master so positioned to the copying light and a device for the imaging of the copy master onto a photosensitive copy material, characterised in that the illuminating device comprises a variable exposure objective (7) by means of which the size of the surface of the master exposed to the copying light may be adapted to the particular master format set.

2. Apparatus according to claim 1, characterised in that the exposure objective (7) is electrically adjustable and that a control (100) is provided, which sets the exposure objective (7) in accordance with the master format.

3. Apparatus according to claim 1 or 2, characterised in that the variable exposure objective (7) has on its side facing the copy master (V) an adapting element (74) which is optically stationary but mounted in a replaceable manner.

4. Apparatus according to claim 3, characterised in that several different adapting elements (74, 74') are mounted on a changing device (110), said adapting elements being capable of being pivoted selectively into the beam path of the exposure objective (7).

5. Apparatus according to claim 4, characterised in that a changing device (110) is provided for different master masks (94, 94').

6. Apparatus according to claim 5, characterised in that the changing device carrying the adapting elements (74, 74') and the changing device for the master masks (94, 94') are coupled together or form a unit (110), and an adapting element is assigned to each master mask.

7. Apparatus according to claim 6, characterised in that a sensor is provided to recognise the particular master mask located in the copying beam path, and in that the control (100) sets the variable exposure objective (7) as indicated by the sensor.

8. Apparatus according to claim 6, characterised in that the changing devices (110) are electrically driven and are actuated by the control (100) in keeping with the master format desired.

9. Apparatus according to any one of claims 1 to 8, characterised in that the exposure device comprises an electrically variable light attenuation element (120).

10. Apparatus according to claim 9, characterised in that the light attenuation element is an aperture disk (120) with its total aperture varying as a function of its angular position.

Fig. 1

Fig. 2

Fig. 3